# EUROPÄISCHE PATENTSCHRIFT

(11) **EP 3 615 493 B1**
(45) Veröffentlichungstag und Bekanntmachung des Hinweises auf die Patenterteilung: **10.03.2021**
(21) Anmeldenummer: 18726065.8
(22) Anmeldetag: 25.04.2018
(51) Int. Cl.: C04B 35/453, C04B 35/52, C04B 38/00

(54) **PORÖSES MATERIAL ZUR VERWENDUNG IN EINEM KATALYTISCHEN PROZESS**
POROUS MATERIAL FOR USE IN A CATALYTIC PROCESS
MATIÈRE POREUSE À EMPLOYER DANS UN PROCESSUS CATALYTIQUE

(30) Priorität: 27.04.2017 DE 102017109025
(43) Veröffentlichungstag der Anmeldung: 04.03.2020
(73) Patentinhaber: Technische Universität Hamburg-Harburg, 21073 Hamburg (DE)
(72) Erfinder: FIEDLER, Bodo, 21075 Hamburg (DE); MARX, Janik, verstorben (DE); WILHELMY, Felix, 21337 Lüneburg (DE)
(74) Vertreter: Koplin, Moritz
(86) Internationale Anmeldenummer: PCT/EP2018/060643
(87) Internationale Veröffentlichungsnummer: WO 2018/197587

(56) Entgegenhaltungen:
- EP-A1- 2 954 951
- WO-A1-2009/149540
- WO-A1-2014/019880
- WO-A2-2011/116751
- DE-A1-102008 000 100
- DE-U1-202012 011 892
- YUXI LIU ET AL: "Controlled Generation of Uniform Spherical LaMnO 3 , LaCoO 3 , Mn 2 O 3 , and Co 3 O 4 Nanoparticles and Their High Catalytic Performance for Carbon Monoxide and Toluene Oxidation", INORGANIC CHEMISTRY, Bd. 52, Nr. 15, 12. Juli 2013 (2013-07-12) , Seiten 8665-8676, XP055479921, EASTON, US ISSN: 0020-1669, DOI: 10.1021/ic400832h

## Beschreibung

### GEBIET

Die vorliegende Erfindung bezieht sich auf ein poröses Material zur Verwendung in einem katalytischen Prozess. Insbesondere bezieht sich die vorliegende Erfindung auf ein poröses kohlenstoffhaltiges Material mit hydrophilisierter Oberfläche zur Verwendung in einem katalytischen Prozess.

### HINTERGRUND

Aus der DE 20 2012/011892 U1 ist ein Prozess zur Herstellung von kohlenstoffhaltigem Nanomaterial bekannt. Das Nanomaterial wird dabei durch Abscheidung von Kohlenstoff aus der Gasphase auf eine keramische Modellstruktur (im Folgenden auch als Templat bezeichnet) hergestellt, die aus einer Vielzahl an Einzelelementen, insbesondere Tri- oder Tetrapoden, besteht, die an Kontaktstellen aneinanderstoßen.

Der Kohlenstoff überwächst diese Kontaktstellen während der Abscheidung und bildet die Modellstruktur als eine durchgehend kovalent gebundene Graphitschicht ab. Das solcherart hergestellte Nanomaterial zeichnet sich dadurch aus, dass es grundsätzlich Hohlstrukturen aufweist, die durch die Anlagerung des abgeschiedenen Kohlenstoffs aus der Gasphase auf die Modellstruktur entstehen, wobei die Hohlstrukturen im Zuge des Abscheidungsprozesses oder in nachfolgenden Prozessschritten gefüllt werden können.

Die keramische Modellstruktur kann Bestandteil des Nanomaterials bleiben oder im Zuge der Herstellung des Nanomaterials aufgelöst werden, insbesondere während des Abscheidungsschritts des Kohlenstoffs. Die Auflösung kann beispielsweise durch thermischen Einfluss oder eine chemische Reaktion oder eine Kombination der Beiden erfolgen, wodurch eine Hohlstruktur entsteht, deren Innenraum durch die ursprüngliche Modellstruktur definiert ist, bzw. dieser entspricht.

Weiterer Stand der Technik findet sich in WO 2011/116751 A2, EP 2 954 951 A1, DE 10 2008 000100 A1 und YUXI LIU ET AL.: "Controlled Generation of Uniform Spherical LaMnO3, LaCoO3, Mn2O3, and Co3O4 Nanoparticles and Their High Catalytic Performance for Carbon Monoxide and Toluene Oxidation", INORGANIC CHEMISTRY, Bd. 52, Nr. 15, 12. Juli 2013, Seiten 8665-8676, EASTON, US.

### ZUSAMMENFASSUNG

Während der im Vorhergehenden beschriebene Prozess die Erzeugung von kohlenstoffhaltigem Material mit verbesserten Eigenschaften ermöglicht, verbleibt Raum für weitere Verbesserungen hinsichtlich der Herstellung porösen Materials, welches an unterschiedliche Verwendungsgebiete angepasst ist.

Es ist daher die Aufgabe der vorliegenden Erfindung, den aus der DE 20 2012/011892 U1 bekannten Prozess, welcher hiermit als Gegenstand dieser Offenbarung einbezogen wird, abzuwandeln und hinsichtlich unterschiedlicher Verwendungsgebiete des durch den Prozess hergestellten porösen Materials anzupassen, insbesondere in Hinblick auf die Verwendung des Materials als Katalysator- und/oder Filtermaterial.

Ein erfindungsgemäßes Verfahren zur Herstellung eines porösen Materials zur Verwendung als Katalysatormaterial umfasst ein Pressen und Sintern eines Gemischs, welches ein Oxid und Nanopartikel aufweist, zur Erzeugung eines keramischen Templats, wobei das Oxid einen ersten Stoff und die Nanopartikel einen zweiten Stoff aufweisen, und ein Durchführen eines chemischen Gasphasenabscheidungsprozesses durch Zuführen eines wasserstoffhaltigen Gases bei einer Temperatur, die höher ist, als ein Schmelzpunkt des ersten Stoffes und kleiner, als ein Schmelzpunkt des zweiten Stoffes.

Dabei sind unter dem Begriff "Nanopartikel", wie er in der Beschreibung und den Ansprüchen verwendet wird, insbesondere Verbünde von einigen bis zu einigen tausend Atomen oder Molekülen zu verstehen, deren Größe zwischen einem und hundert Nanometern (nm) liegt. Ferner ist unter dem Begriff "keramisches Templat", wie er in der Beschreibung und den Ansprüchen verwendet wird, insbesondere eine Modellstruktur zu verstehen, die aus einer

Vielzahl von Einzelelementen, insbesondere Tri- oder Tetrapoden, besteht, die an Kontaktstellen aneinanderstoßen. Des Weiteren ist unter dem Begriff "Stoff", wie er in der Beschreibung und den Ansprüchen verwendet wird, insbesondere ein chemisches Element zu verstehen.

Somit kann die Form des porösen Materials durch das keramische Templat vorgegeben werden, während der erste Stoff durch Reduktion des Oxids und Verdampfen teilweise oder vollständig entfernt wird, die Nanopartikel jedoch im porösen Material verbleiben.

Vorzugsweise weist das Gemisch Zinkoxid und Polyvinylbutyral auf.

Zinkoxid weist eine besondere Eignung für die Erzeugung eines keramischen Templats auf, da Zinkoxid in einem aus WO 2011/116751 A2 vorbekannten Verfahren, welches hiermit als Gegenstand dieser Offenbarung einbezogen wird, zu Modellstrukturen mit vorteilhaften mikroskopischen Geometrien geformt werden kann, die makroskopische Abmessungen im Zentimeter-Bereich (cm-Bereich) aufweisen.

Ferner kann Zinkoxid durch Reduktion mittels eines Reduktionsmittels und anschließendes Verdampfen entfernt werden, wodurch poröse Materialien hergestellt werden können, die keine oder nur noch fertigungstechnisch unvermeidbare Reste des ersten Stoffes der ursprünglichen Modellstruktur aufweisen, ohne das hierzu ein aufwendiger, nachgeschalteter Prozess erforderlich ist.

Vorzugsweise weisen die Nanopartikel ein Übergangsmetall oder ein Übergangsmetalloxid auf, insbesondere Platin, Palladium, Titanoxid, Magnesiumoxid oder Eisenoxid. Zudem können auch Al₂O₃, CuO, CeO₂, Cr₂O₃, OsO₄, V₂O₅ oder Co₃O₄, oder andere Metall/Metalloxide mit einem Schmelzpunkt oberhalb 900°C als Nanopartikelmaterial verwendet werden.

Vorzugsweise umfasst das wasserstoffhaltige Gas Kohlenstoff.

Dadurch kann ein Abscheiden des Kohlenstoffs auf die Modellstruktur bei gleichzeitiger Reduktion des Oxids und Entfernung des ersten Stoffes erfolgen.

Vorzugsweise umfasst das Verfahren ferner ein Plasmabehandeln einer durch den chemischen Gasphasenabscheidungsprozess gebildeten kohlenstoffhaltigen Oberfläche des porösen Materials zur Hydrophilisierung der Oberfläche.

Dadurch kann das poröse Material zum Filtern von Wasser oder wasserhaltigen Flüssigkeiten verwendet werden.

Vorzugsweise wird das poröse Material in einem Verfahren zur Behandlung einer Flüssigkeit verwendet, wobei das Verfahren ein Führen der Flüssigkeit in das poröse Material und ein Beleuchten des porösen Materials mit ultravioletter Strahlung umfasst.

Dadurch kann eine photokatalytische Behandlung der Flüssigkeit durchgeführt werden, wobei organische Materialien an der Oberfläche des porösen Materials zersetzt werden.

Vorzugsweise umfasst das Verfahren ein Ummanteln einer Lichtquelle mit dem porösen Material.

Dadurch können Lichtverluste, wie sie beim Bestrahlen der Oberfläche durch eine getrübte Flüssigkeit hindurch auftreten würden, reduziert werden.

Vorzugsweise umfasst das Verfahren ein Führen der Flüssigkeit durch das poröse Material.

Dadurch kann ein mechanisches Filtern der Flüssigkeit mit dem Zersetzen von organischen Materialien an der Oberfläche des porösen Materials kombiniert werden.

Eine Vorrichtung kann ein mit dem Verfahren erzeugtes poröses kohlenstoffhaltiges Material umfassen, welches eine hydrophile Oberfläche aufweist, und übergangsmetallhaltige Nanopartikel.

Das poröse kohlenstoffhaltige Material kann eine spezifische Oberfläche von mehr als hundert Quadratmeter pro Gramm (m2/g) und eine mittlere Porengröße von weniger als einem Mikrometer (µm) aufweisen.

Die Vorrichtung kann ferner eine Lichtquelle umfassen, wobei übergangsmetallhaltige Nanopartikel in eine Beschichtung der Lichtquelle eingebettet sind, und/oder auf einer Beschichtung der Lichtquelle angeordnet sind.

Die Vorrichtung kann eine Lichtquelle umfassen, wobei das poröse Material einen Dekontaminationsbereich begrenzt und übergangsmetallhaltige Nanopartikel an einer von der Lichtquelle mit Licht beleuchtbaren Innenseite der des porösen Materials angeordnet sind.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 ein Flussdiagramm eines erfindungsgemäßen Verfahrens zur Herstellung eines porösen Materials zur Verwendung als Katalysatormaterial;
Fig. 2 ein Abscheiden eines Stoffes auf eine keramische Modellstruktur zur Erzeugung des porösen Materials;
Fig. 3 eine beispielhafte Verwendung des porösen Materials als Katalysatormaterial;
Fig. 4 eine Vorrichtung, in der das poröse Material als Katalysatormaterial verwendet werden kann;
Fig. 5 eine Abwandlung der in Fig. 4 gezeigten Vorrichtung;
Fig. 6 eine Abwandlung der in Fig. 4 gezeigten Vorrichtung;
Fig. 7 eine Abwandlung der in Fig. 6 gezeigten Vorrichtung; und
Fig. 8 eine Abwandlung der in Fig. 7 gezeigten Vorrichtung zeigt.

Dabei sind in den Zeichnungen gleiche oder analoge Elemente durch gleiche Bezugszeichen gekennzeichnet.

### DETAILLIERTE BESCHREIBUNG

Ausführungsformen der vorliegenden Erfindung beziehen sich auf die Erzeugung und Verwendung eines porösen Materials, welches Übergangsmetalloxid- oder Übergangsmetallnanopartikel aufweist, wobei die Übergangsmetalloxid- oder Übergangsmetallnanopartikel insbesondere in eine dreidimensionale hierarchische Kohlenstoffstruktur eingebettet sein können. Das daraus resultierende mechanisch stabile und elektrisch wie auch thermisch gut leitfähige Material eignet sich insbesondere für den Einsatz als Katalysatormaterial.

Ein weiterer Vorteil der hierarchischen Kohlenstoffstruktur ist ihre Temperaturstabilität von bis zu 700°C und ihre Recyclingfähigkeit, da durch Erwärmen der Kohlenstoffstruktur auf eine Temperatur über der Zersetzungstemperatur des Kohlenstoffs die Nanopartikel wiedergewonnen werden können. Durch die Funktionalisierung der ansonsten hydrophoben Oberfläche kann die Kohlenstoffstruktur zudem als Filtermaterial für flüssige Medien eingesetzt werden.

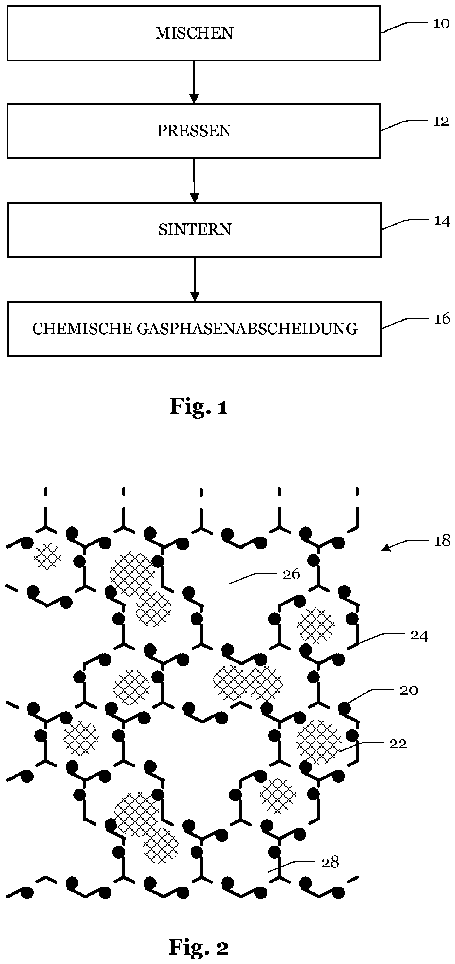

Besagte Kohlenstoffstruktur kann durch ein mehrstufiges Verfahren erzeugt werden, welches schematisch in Fig. 1 dargestellt ist. In den Schritten 10 bis 14 erfolgt die Herstellung eines keramischen Templats. Dabei wird in Schritt 10 Übergangsmetalloxidpulver (vorzugsweise mit einer mittleren Korngröße zwischen 0,1 bis 100 (im und besonders vorzugsweise mit einer mittleren Korngröße zwischen 1 bis 10 µm), wie z. B. Zinkoxidpulver, mit Nanopartikeln (1-5 vol%, mit einer Korngröße kleiner als 100 nm) aus katalytischen Übergangsmetallen, wie z. B. Platin oder Palladium (unter einer Argon-Athmosphäre), oder Übergangsmetalloxiden, wie z. B. TiO₂, MgO oder Fe₃O₄, und einem Bindemittel, wie z. B. Polyvinylbutyral (45 vol%), in destilliertem Wasser (mit einer Drehgeschwindigkeit von 645 Umdrehungen/min über vier Stunden bei den Übergangsmetallen und eine Stunde bei den Übergangsmetalloxiden) vermischt:

| Substanz | Mittlere Korngröße in µm | Reinheit in % | Schüttdichte in g/cm3 |
|---|---|---|---|
| ZnO | <5 | 99,9% | 5,61g/cm³ |
| PVB | - | 97,5 | 1,1 g/cm3 |
| TiO₂ | 10 | 99,9% | 4,23g/cm³ |
| MgO | 5 | 99,9% | 3,58 g/cm³ |
| Pd | <1 | 99,9% | 12,02 g/cm³ |

Nach dem Vermischen, wird die Suspension bei einer Temperatur unterhalb der Glasübergangstemperatur von PVB (bspw. 60°C) in einem Ofen getrocknet und danach gemahlen und gesiebt. Dadurch wird die mittlere Korngröße der katalytischen Übergangsmetalle oder Übergangsmetalloxide reduziert, wobei je nach Substanz mittlere Korngrößen von 10-500 nm resultieren (TiO₂: 100-150 nm; Pd: 50-200 nm; MgO:10-30 nm). Anschließend wird das Gemisch in den Schritten 12 und 14 gepresst (mit einem Druck von 0,318N/mm²) und gesintert (bei einer Sinterzeit von ca. 400 Minuten, in denen das Gemisch von Raumtemperatur um 2K/min auf 400°C erhitzt und nach 20-30 Minuten wieder mit 2K/min auf Raumtemperatur abgekühlt wird), wodurch ein keramisches Templat mit hierarchischer Struktur entsteht. Im Anschluss an die Herstellung des keramischen Templats erfolgt die Replikation in eine Kohlenstoffstruktur unter Verwendung eines chemischen Gasphasenabscheidungsprozesses (CVD-Prozesses), wobei die zuvor eingestellte hierarchische Struktur erhalten bleibt. Bspw. kann ein wasserstoff- und kohlenstoffhaltiges Gas zugeführt werden, z. B. ein aromatischer Kohlenwasserstoff, wie Toluol. Insbesondere kann das keramische Templat (das bspw. ein Gewicht von ca. 500 g aufweist) unter Zuführung von Argon (0,2l/min) auf 760°C erhitzt werden. Ist das Templat auf 760°C erhitzt, können eine Stunde lang Wasserstoff (60 ml/min) und Toluol (5ml/h) zugeführt werden. Danach kann das Templat (ohne weitere Zuführung von Toluol) auf 900°C erhitzt werden. Nach einer Stunde kann die Zuführung von Wasserstoff gestoppt und anschließend unter Zuführung von Argon (0,41/min) gekühlt werden. Bei der Verwendung von TiO₂ wird in dem Prozess Anatas in Rutil umgewandelt, welches ebenfalls als katalytisches Material Verwendung findet. Diese Reduktion kann durch eine geringer gewählte Prozesstemperatur von <700°C im CVD-Prozess vermieden werden.

Fig.2 zeigt dazu schematisch ein keramisches Templat 18, welches mit Nanopartikeln 20 vermischte Übergangsmetalloxidpulverkörner 22 umfasst, die an Kontaktflächen miteinander verbunden sind. Auf dem Templat 18 wird eine Kohlenstoffschicht abgeschieden, wobei gleichzeitig das Übergangsmetalloxid der Übergangsmetalloxidpulverkörner 22 durch Reduktion und anschließendes Verdampfen entfernt wird, wodurch sich eine kohlenstoffhaltige Oberfläche 24 ausbildet. Die Prozesstemperatur wird dabei vorzugsweise so gewählt, dass das Übergangsmetall der Nanopartikel 20 im Gegensatz zum Übergangsmetalloxid der Übergangsmetalloxidpulverkörner 22 nicht oder allenfalls in unwesentlichem Maße verdampft wird.

Die so erzeugte hierarchische Kohlenstoffstruktur ergibt ein poröses Material (mit Kohlenstoff-Wanddicken im Bereich von 5 nm), welches sich typischerweise durch eine hohe spezifische Oberfläche (größer 100 m²/g und insbesondere größer 400 m²/g) auszeichnet, was den Einsatz des porösen Materials als Katalysatormaterial begünstigt. Insbesondere weist die hierarchische Kohlenstoffstruktur typischerweise Mikroporen 26 und Nanoporen 28 auf, wobei die Größe der Mikroporen 26 durch das verwendete Bindemittel bei der Herstellung des keramischen Templats 18 eingestellt werden kann, was den Einsatz des porösen Materials als Filtermaterial begünstigt

Einfluss auf die spezifische Oberfläche haben ferner insbesondere die in der hierarchischen Kohlenstoffstruktur vorhandenen Nanoporen 28, welche durch das Sintern und insbesondere durch die Temperaturführung während des Sinterns eingestellt werden können. Dabei ist es für die Erreichung einer großen spezifischen Oberfläche vorteilhaft, eine gezielte Ausbildung der Sinterhälse zu unterstützen und eine Vollversinterung des Templats 18 zu vermeiden. Durch Anpassen der Korngrößen der verwendeten Materialien, wie z. B. dem Zinkoxidpulver oder dem Bindemittel, lässt sich die Größe der Poren 26, 28 beliebig und je nach Anforderung einstellen.

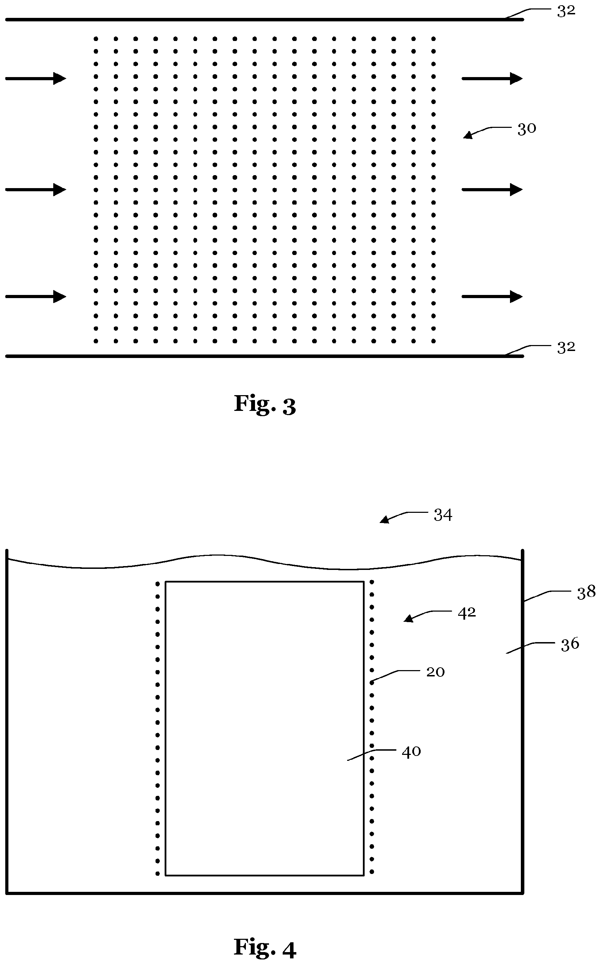

Fig. 3 zeigt die Verwendung eines porösen Materials 30, vorzugsweise mit einer (gemäß dem in Fig. 1 gezeigten Verfahren erzeugten) hierarchischen Kohlenstoffstruktur, welches übergangsmetallhaltige Nanopartikel 20 aufweist, als Katalysatormaterial. Dabei wird ein Fluid, wie z. B. ein Gas, durch das poröse Material 30 geführt, welches in einer Fluidleitung 32 angeordnet ist. Wie oben ausgeführt, kann die Temperatur des Fluids, wenn das poröse Material 30 eine hierarchische Kohlenstoffstruktur aufweist, auf Grund der erhöhten Temperaturbeständigkeit der Kohlenstoffstruktur zwischen 400°C und 700°C, zwischen 500°C und 700°C oder zwischen 600°C und 700°C liegen.

Die hierarchische Struktur, welche Poren 26, 28 unterschiedlicher Größen aufweist, und die einstellbaren Porengrößen, erlauben ferner neben der Verwendung als Katalysatormaterial auch eine vorteilhafte Verwendung des porösen Materials 30 als Filtermaterial. Bspw. kann das poröse Material 30 zur Wasseraufbereitung genutzt werden. Fig. 4 zeigt hierzu eine Vorrichtung 34, welche im Betrieb zumindest teilweise in eine Flüssigkeit 36 eingetaucht ist. Die Flüssigkeit 36 umfasst bspw. Wasser oder Abwasser, welches sich in einer Einrichtung 38, wie bspw. einem Becken oder einer Fluidleitung befindet.

Die Vorrichtung 34 umfasst eine Lichtquelle 40, wie bspw. eine lichtemittierende Diode (LED), die in einem wasserdichten Gehäuse angeordnet ist und ultraviolettes Licht aussendet (bspw. Licht einer Wellenlänge im Bereich 365 nm bis 370 nm). Wie in Fig. 4 gezeigt, kann die Lichtquelle 40 in oder angrenzend an eine photokatalytische Struktur 42 angeordnet, bzw. ein lichtdurchlässiger Teil des Gehäuses mit einer photokatalytischen Struktur 42 versehen (z. B. beschichtet) sein. Die photokatalytische Struktur 42 kann Nanopartikel 20 (insbesondere aus Titandioxid oder Silber) umfassen, die bspw. in eine Polymermatrix eingebettet oder auf einem metallischen Sieb immobilisiert sind. Ferner kann die photokatalytische Struktur 42 aus dem porösem Material 30 gebildet sein, wobei, wie oben beschrieben, die Nanopartikel 20 in eine hierarchische Kohlenstoffstruktur eingebettet sind, deren Oberfläche bspw. mittels einer Plasmabehandlung hydrophilisiert worden ist.

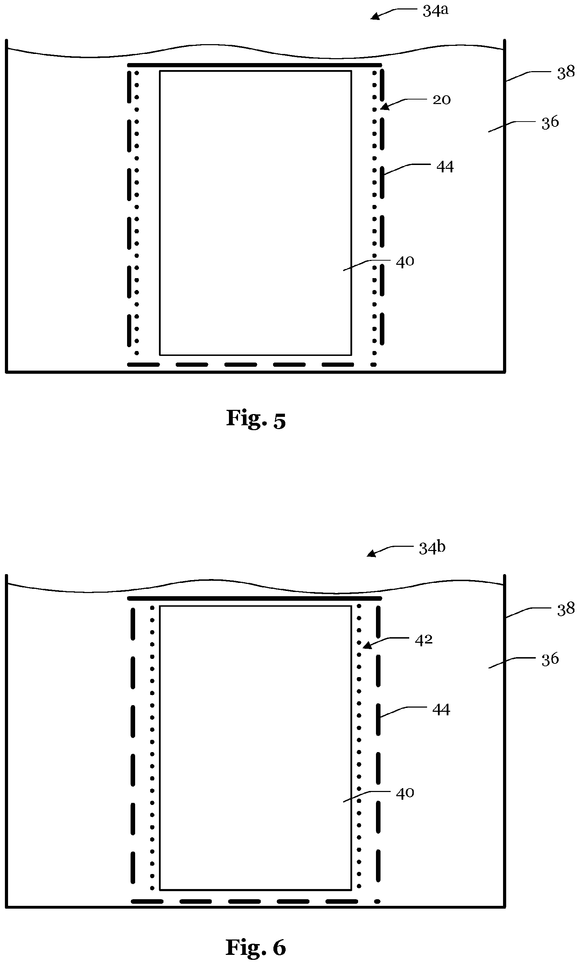

Fig. 5 zeigt eine Abwandlung der in Fig. 4 gezeigten Vorrichtung 34 bei der die Nanopartikel 20 innerhalb einer Filterstruktur 44 angeordnet sind. Die Filterstruktur 44 kann bspw. ein metallisches Sieb umfassen, welches die Nanopartikel 20 schützend umgibt bzw. den Nanopartikeln 20 als Trägerstruktur dient und eine grobe Filterung der Flüssigkeit 36 ermöglicht. Insbesondere können die Nanopartikel 20 in eine Polymermatrix eingebettet, auf der Filterstruktur 44 immobilisiert, oder in dem porösen Material 30 umfasst sein. Im Gegensatz zu der in Fig. 4 gezeigten Vorrichtung 34 ist bei der in Fig. 5 gezeigten Vorrichtung 34a zwischen den Nanopartikeln 20 und der Lichtquelle 40 ein parallel zur Lichtquellenoberfläche verlaufender freier Zwischenraum vorgesehen, wodurch die Flüssigkeit 36 bei entsprechender Fließgeschwindigkeit ohne nennenswerte Druckverluste an der Oberfläche der Lichtquelle 40 entlang strömen kann.

Fig. 6 zeigt eine Abwandlung der in Fig. 4 gezeigten Vorrichtung 34, bei der die photokatalytische Struktur 42 innerhalb der Filterstruktur 44, jedoch wie bei der in Fig. 4 gezeigten Vorrichtung 34, unmittelbar an der Oberfläche der Lichtquelle 40 angeordnet ist. Dadurch kann bei Flüssigkeiten 36, die eine Trübung aufweisen, eine Reduktion der benötigten Lichtleistung im Vergleich zu der in Fig. 5 gezeigten Anordnung erreicht werden. Ferner kann die photokatalytische Struktur 42 vor Beschädigung durch Feststoffe geschützt werden.

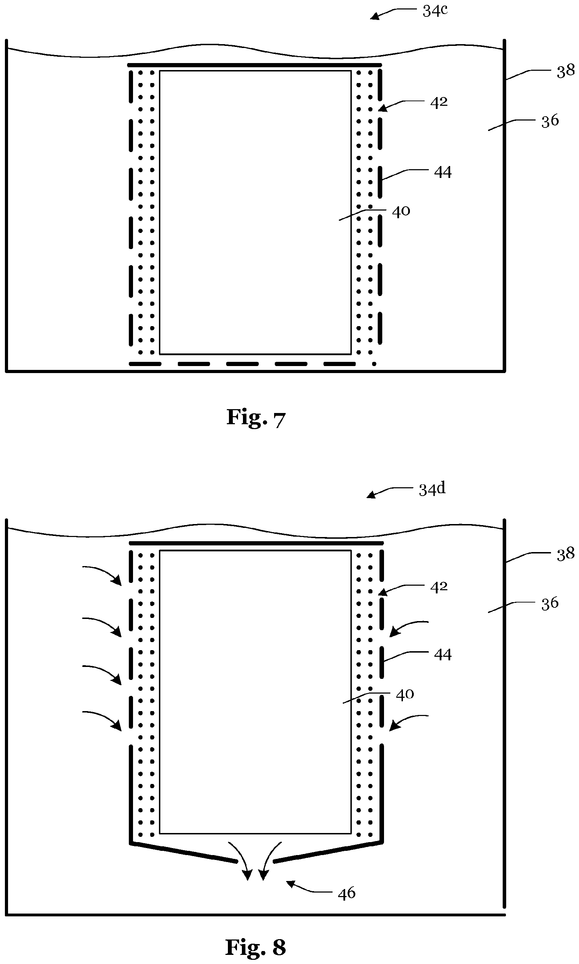

Fig. 7 zeigt eine Abwandlung der in Fig. 6 gezeigten Vorrichtung 34b, bei der die photokatalytische Struktur 42 innerhalb der Filterstruktur 44 angeordnet ist und einen Dekontaminationsbereich zwischen dem Gehäuse der Lichtquelle 40 und der Filterstruktur 44 ausfüllt. Fig. 8 zeigt eine Abwandlung der in Fig. 7 gezeigten Vorrichtung 34c, bei der in der Filterstruktur 44 eine Öffnung 46 vorgesehen ist, durch die die Flüssigkeit 36 bspw. mittels einer Pumpe aus der Filterstruktur 44 hinaus (oder alternativ in die Filterstruktur 44 hinein) befördert werden kann.

### BEZUGSZEICHENLISTE

- 10-16: Prozessschritte
- 18: Templat
- 20: Nanopartikel
- 22: Übergangsmetalloxidpulverkörner
- 24: kohlenstoffhaltige Oberfläche
- 26: Mikroporen
- 28: Nanoporen
- 30: poröses Material
- 32: Fluidleitung
- 34, 34a-34d: Vorrichtung
- 36: Flüssigkeit
- 38: Einrichtung
- 40: Lichtquelle
- 42: photokatalytische Struktur
- 44: Filterstruktur
- 46: Öffnung

## Patentansprüche

1. Verfahren zur Herstellung eines porösen Materials (30) zur Verwendung als Katalysatormaterial, umfassend:
Pressen (12) und Sintern (14) eines Gemischs, welches ein Oxid und Nanopartikel (20) aufweist, zur Erzeugung eines keramischen Templats (18), wobei das Oxid einen ersten Stoff und die Nanopartikel (20) einen zweiten Stoff aufweisen; und
Durchführen (16) eines chemischen Gasphasenabscheidungsprozesses durch Zuführen eines wasserstoff- und kohlenstoffhaltigen Gases bei einer Temperatur, die höher ist, als ein Schmelzpunkt des ersten Stoffes und kleiner ist, als ein Schmelzpunkt des zweiten Stoffes, wobei das Oxid reduziert, der erste Stoff verdampft und der Kohlenstoff abgeschieden wird.

2. Verfahren nach Anspruch 1, wobei das Gemisch Zinkoxid und Polyvinylbutyral aufweist.

3. Verfahren nach Anspruch 1 oder 2, wobei die Nanopartikel (20) ein Übergangsmetall oder ein Übergangsmetalloxid aufweisen, insbesondere Platin, Palladium, Titanoxid, Magnesiumoxid oder Eisenoxid.

4. Verfahren nach einem der Ansprüche 1 bis 3, ferner umfassend:
Plasmabehandeln einer durch den chemischen Gasphasenabscheidungsprozess gebildeten kohlenstoffhaltigen Oberfläche (24) des porösen Materials (30) zur Hydrophilisierung der Oberfläche (24).

5. Verfahren zur Behandlung einer Flüssigkeit (36) mittels eines nach einem der Ansprüche 1 bis 4 hergestellten porösen Materials (30), umfassend:
Führen der Flüssigkeit (36) in das poröse Material (30); und
Beleuchten des porösen Materials (30) mit ultravioletter Strahlung.

6. Verfahren nach Anspruch 5, umfassend:
Ummanteln einer Lichtquelle (40) mit dem porösen Material (30).

7. Verfahren nach Anspruch 5 oder 6, umfassend:
Führen der Flüssigkeit (36) durch das poröse Material (30).

## Claims

1. Method for producing a porous material (30) for use as a catalyst material, comprising:
pressing (12) and sintering (14) a mixture that comprises an oxide and nanoparticles (20) in order to produce a ceramic template (18), wherein the oxide comprises a first substance and the nanoparticles (20) comprise a second substance; and
performing (16) a chemical vapour deposition process by supplying a gas containing hydrogen and carbon at a temperature that is higher than a melting point of the first substance and lower than a melting point of the second substance, wherein the oxide is reduced, the first substance is evaporated and the carbon is deposited.

2. Method according to claim 1, wherein the mixture comprises zinc oxide and polyvinyl butyral.

3. Method according to claim 1 or 2, wherein the nanoparticles (20) comprise a transition metal or a transition metal oxide, in particular platinum, palladium, titanium oxide, magnesium oxide or iron oxide.

4. Method according to any one of claims 1 to 3, further comprising:
plasma treatment of a carbon-containing surface (24) of the porous material (30), formed by the chemical vapour deposition process, in order to make the surface (24) hydrophilic.

5. Method for processing a liquid (36) using a porous material (30) produced according to one of claims 1 to 4, comprising:
passing the liquid (36) into the porous material (30); and
illuminating the porous material (30) with ultraviolet radiation.

6. Method according to claim 5, comprising:
coating a light source (40) with the porous material (30).

7. Method according to claim 5 or 6, comprising:
passing the liquid (36) through the porous material (30).

## Revendications

1. Procédé de fabrication d'un matériau poreux (30) à utiliser en tant que matériau catalytique, comprenant :
la compression (12) et le frittage (14) d'un mélange, qui présente un oxyde et des nanoparticules (20), pour générer une matrice céramique (18), dans lequel l'oxyde présente une première matière et les nanoparticules (20) présentent une seconde matière ; et
la réalisation (16) d'un processus de dépôt chimique en phase gazeuse par apport d'un gaz contenant de l'hydrogène et du carbone à une température, qui est supérieure à un point de fusion de la première matière et est inférieure à un point de fusion de la seconde étoffe, dans lequel l'oxyde est réduit, la première matière est évaporée et le carbone est déposé.

2. Procédé selon la revendication 1, dans lequel le mélange présente de l'oxyde de zinc et du polybutyral vinylique.

3. Procédé selon la revendication 1 ou 2, dans lequel les nanoparticules (20) présentent un métal de transition ou un oxyde de métal de transition, en particulier du platine, du palladium, de l'oxyde de titane, de l'oxyde de magnésium ou de l'oxyde de fer.

4. Procédé selon l'une quelconque des revendications 1 à 3, comprenant en outre :
un traitement au plasma d'une surface contenant du carbone (24) formée par le processus de dépôt chimique en phase gazeuse du matériau poreux (30) par hydrophilisation de la surface (24).

5. Procédé de traitement d'un liquide (36) au moyen d'un matériau poreux (30) fabriqué selon l'une quelconque des revendications 1 à 4, comprenant :
le guidage du liquide (36) dans le matériau poreux (30) ; et
l'éclairage du matériau poreux (30) avec un rayonnement ultraviolet.

6. Procédé selon la revendication 5, comprenant :
le gainage d'une source de lumière (40) avec le matériau poreux (30).

7. Procédé selon la revendication 5 ou 6, comprenant :
le guidage du liquide (36) à travers le matériau poreux (30).
